# EUROPÄISCHE PATENTSCHRIFT

(11) **EP 1 936 346 B1**
(45) Veröffentlichungstag und Bekanntmachung des Hinweises auf die Patenterteilung: **20.07.2011**
(21) Anmeldenummer: 07024636.8
(22) Anmeldetag: 19.12.2007
(51) Int. Cl.: G01L 5/00

(54) **Verfahren zur Eigenspannungsermittlung eines Prüfkörpers**
Method for determining the residual stress of a test piece
Procédé de détermination de la contrainte résiduelle d'une éprouvette

(30) Priorität: 21.12.2006 DE 102006060714
(43) Veröffentlichungstag der Anmeldung: 25.06.2008
(73) Patentinhaber: Fraunhofer-Gesellschaft zur Förderung der angewandten Forschung e.V., 80686 München (DE)
(72) Erfinder: Pfeiffer, Wulf, Dr.-Ing., 79331 Tenningen (DE); Wenzel, Johannes, 79346 Endingen (DE)
(74) Vertreter: Rösler, Uwe

(56) Entgegenhaltungen:
- DE-A1- 3 940 312
- Anonymous: "Measurement of residual stresses by the hole-drilling strain gage method" Tech Note TN-503-6 2. Mai 2005 (2005-05-02), XP002586466 Gefunden im Internet: URL:www.intertechnology.com/Vishay/pdfs/Te chNotes_TechTips/TN-503.pdf [gefunden am 2010-07-09]
- A.T. DE WALD AND M.R. HILL: "Improved data reduction for the deep-hole method of residual stress measurement" J. STRAIN ANALYSIS, Bd. 38, Nr. 1, 1. Januar 2003 (2003-01-01) , Seiten 65-78, XP002586467 DOI: 10.1243/030932403762671908

## Beschreibung

### Technisches Gebiet

Die Erfindung betrifft ein Verfahren zur Eigenspannungsermittlung eines Prüfkörpers nach einem Bohrlochverfahren, bei dem an einer Oberfläche des Prüfkörpers eine Materialabtragung zur Erzeugung einer lokal begrenzten Materialausnehmung vorgenommen wird und eine sich durch die Materialabtragung ändernde Oberflächenform und/oder ein sich durch die Materialabtragung ändernder Dehnungszustand der Oberfläche des Prüfkörpers erfasst wird, der zur Ermittlung der Eigenspannung des Prüfkörpers dient, die der Prüfkörper im Zustand vor der Materialabtragung aufwies.

Unter dem Begriff "Eigenspannungen" versteht man mechanische Spannungen, die in einem Werkstück oder Prüfkörper ohne ein äußeres Einwirken von Kräften oder Momenten vorhanden sind. So können Eigenspannungen im Verlauf der Fertigung, z.B. durch thermische oder mechanische Vorgänge, gewollt oder ungewollt, in ein Werkstück eingebracht werden, bspw. im Wege von Wärmebehandlungen oder im Rahmen von Produktionsschritten wie Fügen, Schweißen, Schleifen, Fräsen oder Beschichten. Eigenspannungen können auch erst oder zusätzlich durch Betriebsbeanspruchungen in einem Werkstück entstehen und bestimmen damit das Betriebsverhalten des Bauteils mit. Meist beeinflussen Eigenspannungen das Bauteilverhalten negativ, z.B. durch Verzug oder vorzeitiges Versagen. Andererseits werden Eigenspannungen immer häufiger nutzbringend eingesetzt, wie z.B. beim gezielten Einbringen von Druckeigenspannungen in eine Oberfläche durch Kugelstrahlen, um z.B. die Schwingfestigkeit von Bauteilen zu erhöhen. Zur sicheren Einschätzung des Betriebsverhaltens, der Betriebssicherheit und der Lebensdauer der Bauteile sowie zur Optimierung der Konstruktion und der Herstellungsverfahren sind deshalb Eigenspannungsermittlungen unumgänglich. In der Werkstoffmechanik unterscheidet man dreierlei Arten von Eigenspannungen:
1. Eigenspannungen erster Art sind über größere Werkstückbereiche, d.h. über mehrere Körner, in Betrag und Richtung nahezu konstant. Abweichungen von Kräfte- und Momentengleichgewicht führen zu makroskopischen Maß- und Formänderungen.
2. Eigenspannungen zweiter Art sind über kleinere Werkstoffbereiche, d.h. über ein Korn oder Teilbereiche eines Korns, nahezu homogen. Makroskopische Form- und Maßänderungen sind nur bei einer ausgeprägten Störung des Gleichgewichts möglich.
3. Eigenspannungen dritter Art sind über kleinste Werkstoffbereiche, d.h. einige Atomabstände, homogen. Makroskopische Änderungen treten nicht auf.

Eigenspannungen erster Art werden auch als Makroeigenspannungen bezeichnet, die Eigenspannungen zweiter und dritter Art dagegen als Mikroeigenspannungen. Das hier näher beschriebene Verfahren zur Eigenspannungsermittlung findet typischerweise an Gegenständen oder Prüfkörpern aus dem Anlagen- und Maschinenbau Anwendung, bei denen es sich um die Ermittlung von Makroeigenspannungen handelt, gleichsam kann aber unter Verwendung anderer Hilfsmittel zur Einbringung der Bohrung und Ermittlung der Dehnungen auch zur Ermittlung von Mikroeigenspannungen in mikroelektronischen oder mikromechanischen Komponenten aus der Mikrosystemtechnik genutzt werden.

Eigenspannungen können mit unterschiedlichen Verfahren ermittelt werden. Man kann zwischen zerstörungsfreien und zerstörenden Verfahren unterscheiden. Bei den zerstörungsfreien Verfahren werden z.B. über Röntgendiffraktometrie oder Neutronenbeugung die Netzebenenabstände eines eigenspannungsbehafteten Kristallgitters gemessen und mit den Netzebenenabständen eines eigenspannungsfreien Kristalls verglichen. Daraus kann der Eigenspannungszustand sowie auch unter Umständen der Eigenspannungstiefenverlauf, abgeschätzt werden. Daneben gibt es zerstörende Verfahren, z.B. durch Zerteilen, Abtrennen oder Anbohren eines Prüfkörpers. Durch derartige Eingriffe in einen Prüfkörper wird eine Änderung des Eigenspannungszustandes regelrecht provoziert. In der Umgebung der entstandenen Materialsausnehmung oder Trennkante treten durch die Änderung des Eigenspannungszustandes Form- und / oder Dehnungsänderungen auf, deren Auswirkungen z.B. an der Oberfläche des Prüfkörpers als Änderungen der Oberflächenform und/oder als Änderung des Dehnungszustandes an der Oberfläche beobachtet werden können. Die durch die Provokation auftretenden Verformungen, die auch als relaxierte Dehnungen bezeichnet werden, ermöglichen einen Rückschluss auf den vor der Provokation vorliegenden Eigenspannungszustand. Zwei der gängigsten Verfahren zur Eigenspannungsermittlung sind das sogenannte Bohrlochverfahren nach ASTM E 837-99 (American Society for Testing and Materials) und das so genannte inkrementelle Bohrlochverfahren, bei denen der Prüfkörper angebohrt wird. Üblicherweise werden mit Hilfe einer auf der Oberfläche des Prüfkörpers aufgebrachten, standardisierten Dehnungsmessstreifen-Rosette (DMS-Rosette) gleichzeitig die Dehnungsänderungen an der Oberfläche in drei definierten Raumrichtungen lateral zur Prüfkörperoberfläche erfasst. Die Bohrlochverfahren werden auch häufig als semizerstörende Verfahren eingestuft, zumal der Prüfkörper nach der Untersuchung zumeist noch verwendbar ist. Die Vorteile der Bohrlochverfahren sind u.a. Mobilität und Flexibilität der Prüfvorrichtung. Es können sowohl Untersuchungen im Labor als auch Feldversuche durchgeführt werden. Des Weiteren ist das Verfahren weitestgehend unabhängig von Größe und Form des Prüfkörpers anwendbar.

Beim Bohrlochverfahren nach ASTM E 837-99 wird in einem Schritt ein Sackloch definierter Tiefe normal zur Oberfläche des Prüfkörpers gebohrt. Aus den an der Oberfläche ermittelten Dehnungsänderungen und / oder Änderungen der Oberflächenform werden die vor der Provokation vorliegenden bezogen auf die Tiefe des Sacklochs mittlere Eigenspannung, bestehend aus mittleren Eigenspannungskomponenten, ermittelt.

Im Gegensatz dazu wird beim inkrementellen Bohrlochverfahren der Tiefenverlauf der Eigenspannung, bspw. in Form von Tiefenverläufen der Eigenspannungskomponenten, ermittelt. Dazu wird eine Bohrung, normal zur Oberfläche des Prüfkörpers, in inkrementellen Schritten bis auf eine Endtiefe vertieft, wobei nach jedem Bohrschritt die Relaxationen, d.h. Dehnungsänderungen der Oberfläche bzw. Änderungen der Oberflächenform ermittelt werden. Letztlich ergibt sich aus der Gesamtabfolge aller durchgeführten Bohrschritte ein aus Einzelwerten bestehender, diskreter Verlauf von Dehnungsänderungen der Oberfläche bzw. Änderungen der Oberflächenform in Abhängigkeit der Bohrtiefe, der so genannte Tiefenverlauf. Aus den diskreten Einzelwerten lassen sich durch geeignete Fit-Routinen funktionale Zusammenhänge zwischen der z.B. an der Oberfläche ausgelösten Dehnungsänderungen und der Bohrlochtiefe erstellen. Um den vor der Provokation vorliegenden Eigenspannungszustand an der Messstelle oder im Messbereich des Prüfkörpers zu ermitteln, stehen mehrere verschiedene Auswerteverfahren bzw. Algorithmen zur Verfügung, z.B. Standard ASTM E 837, Integralmethode nach Schajer [SCHAJER, G.S., Measurement of Non-Uniform Residual Stresses Using the Hole Drilling Method, J. Eng. Materials and Technology, 110 (4), Part I: pp.338-343, Part II: pp.3445-349, 1988], Potenzreihenmethode [SCHAJER, G.S., Applications of Finite Element Calculations to Residual Stress Measurements, J. Eng. Mat. and Tech., Trans ASME 103, April 1981, pp. 157-163] oder die von Schwarz [T. Schwarz; "Beitrag zur Eigenspannungsermittlung an isotropen, anisotropen sowie inhomogenen, schichtweise aufgebauten Werstoffen mittels Bohrlochmethode und Ringkernverfahren"; Technisch-Wissenschaftlicher Bericht; (1996); MPA Stuttgart] weiterentwickelte Methode nach Kockelmann (MPA Stuttgart)
Teilweise nehmen diese Auswerteverfahren Bezug auf eine Kalibriermessung oder die Ergebnisse eines FEM-Modells (Finite Elemente Modell), welches die Übertragungsfunktion beschreibt, mit der die Änderung eines bekannten Eigenspannungszustands in einer bestimmten Bohrtiefe bei einer definierten Geometrie der Ausnehmung zu Dehnungsänderungen an der Oberfläche führen oder zu einer Änderung der Oberflächenform führt. Neben der Versuchsauswertung mittels mechanischer Rechenmodelle besteht auch die Möglichkeit der experimentellen Kalibrierung der Messvorrichtung an bekannten Belastungsfällen. Das Ergebnis aller Auswertemethoden sind jedoch zwei Hauptspannungen σ₁ und σ₂ bezogen auf die Tiefe, sowie deren Richtung bezüglich der Messrichtungen der applizierten, drei Dehnungsmessstreifen aufweisenden DMS-Rosette. Für die Berechnung dieser drei Größen stehen drei Funktionen zur Verfügung, welche die Dehnungsänderung richtungsbezogen über der Abtragstiefe beschreiben. Somit ergibt sich ein lösbares lineares Gleichungssystem mit drei Gleichungen und drei Unbekannten pro Abtragstiefe. Der Informationsgehalt einer solchen Messung ist also nach der Ermittlung des Eigenspannungszustandes in Form von σ₁, σ₂ und deren Richtung bezüglich der Ausrichtung der DMS-Rosette erschöpft. Zusätzliche Messinformationen, mit deren Hilfe-bspw. eine Aussage über die Messqualität getroffen werden könnte, stehen nicht mehr zur Verfügung. Es können daher keine Fehlerangaben angegeben werden, die die Messunsicherheiten der so ermittelten Eigenspannungstiefenverteilung quantitativ anzugeben vermögen. Gerade aber beim inkrementellen Bohrlochverfahren ist die Angabe von Messunsicherheiten besonders wichtig, zumal dieses Messverfahren eine ganze Reihe von Unwägbarkeiten mit sich bringt, die an dem erzielten Messergebnis nicht ohne weiteres erkennbar sind. Dazu zählen bspw. eine exzentrisch zur DMS-Rosette verlaufende Bohrung, zusätzliche plastische Dehnungen durch die Kerbwirkung der Bohrung, große Eigenspannungsgradienten etc.

### Stand der Technik

Bisher sind nur wenige unbefriedigende Möglichkeiten bekannt, Messergebnisse von Bohrlochmessungen quantitativ abzusichern. Eine Möglichkeit besteht darin, mehrere Messungen an gleichartigen Proben oder Prüfkörpern durchzuführen. Da der zu messende Eigenspannungszustand jedoch in der Regel nicht bekannt ist und nicht garantiert werden kann, dass derselbe Eigenspannungszustand bei allen untersuchten Proben oder Prüfkörpern identisch ist, ist diese Vorgehensweise mit Unsicherheiten behaftet.

Weitere Lösungsansätze zur Bestimmung von Messunsicherheiten beruhen auf zwei Methoden.
Bei der ersten Methode werden DMS-Rosetten verwendet, die mehr als drei einzelne Dehnungsaufnehmer aufweisen. Somit ist die Ermittlung eines überbestimmten Messdatensatzes möglich, der zur Berechnung einer Standardabweichung herangezogen werden kann. Der Nachteil der Methode liegt darin, dass die Anzahl der zusätzlichen Dehnungsaufnehmer aus geometrischen Gründen, bedingt durch die eingeschränkten Platzverhältnisse in der nahen Umgebung des Bohrlochs, nicht sehr hoch sein kann. Prototypen solcher DMS-Rosetten besitzen typischerweise ein 3x3 Messgitter. Zudem führen kleine Positionierungsfehler des Bohrwerkzeuges bei einer derartigen Anordnung zu einer Verfälschung der Fehlerangabe. Außerdem sind derartige DMS-Rosetten relativ teuer. Als repräsentative Quelle zu dieser Methode sei der Artikel "Measurement of residual stresses by the hole-drilling strain gage method", Tech Note TN-503-6, 2. Mai 2005, XP002586466, genannt.

Auch bei dem in der DE 39 40 312 A1 beschriebenen Verfahren zur Ermittlung von Eigenspannungen in Bauteilen finden DMS-Rosetten zur Erfassung von Dehnungen bzw. Eigenspannungen Einsatz. Hierbei erfolgt die Messung der Oberflächenrückfederung an einem von einer Ringnut umgebenden Messstellenkern, der an einem Bauteil durch Materialabtragung herausgearbeitet wird.

In dem Beitrag von A.T. De Wald and M.R. Hill, " Improved data reduction for the deep-hole method of residual stress measurement", J. Strain Analysis, Bd. 38 Nr. 1, 1. Jan. 2003, S. 65-78, XP002586467 wird beschrieben, wie Eigenspannungsinformationen anhand eines Bohrkernes sowie durch Vermessung des dabei entstehenden Bohrloches im Bauteil gewonnen werden.

Eine zweite Methode beruht auf der optischen Ermittlung von Dehnungsfeldern in der Umgebung des Bohrloches mittels Speckle-Verfahren oder Grauwertkorrelationsverfahren. Diese Verfahren bieten prinzipiell die Voraussetzung eine statistisch gut gesicherte Messunsicherheit zu bestimmen, nachteilig ist hier jedoch, dass die Messstelle bzw. der Messbereich über einen großen Beobachtungswinkel zugänglich sein muss und zudem bestimmte optische Kriterien erfüllt sein müssen.

### Darstellung der Erfindung

Der Erfindung liegt also die Aufgabe zu Grunde, ein Verfahren anzugeben, mit dem die Ermittlung einer Eigenspannung eines Prüfkörpers mit Angabe eines dem Ermittlungsverfahren anhaftenden Fehlers ermöglicht wird und dies mit einer wissenschaftlich fundierten Sicherheit bei einem verfahrenstechnisch reduzierten Aufwandes.

Die Lösung der der Erfindung zu Grunde liegenden Aufgabe ist im Anspruch 1 angegeben. Den Erfindungsgedanken vorteilhaft weiterbildende Merkmale sind Gegenstand der abhängigen Ansprüche sowie der weiteren Beschreibung unter Bezugnahme auf die Ausführungsbeispiele zu entnehmen.
Lösungsgemäß wird ein Verfahren zur Eigenspannungsermittlung eines Prüfkörpers nach dem inkrementellen Bohrlochverfahren, bei dem an einer Oberfläche des Prüfkörpers eine Materialabtragung zur Erzeugung einer lokal begrenzten Materialausnehmung vorgenommen wird und eine sich durch die Materialabtragung ändernde Oberflächenform und/oder ein sich durch die Materialabtragung ändernder Dehnungszustand der Oberfläche des Prüfkörpers erfasst wird, auf deren Grundlage ein Eigenspannungswert berechnet wird, der zur Ermittlung der Eigenspannung des Prüfkörpers dient, die der Prüfkörper im Zustand vor der Materialabtragung aufwies, dadurch weitergebildet, dass mindestens zwei Materialabtragungen mit jeweils gleicher Materialabtragungstiefe durchgeführt werden, wobei die durch die mindestens zwei Materialabtragungen entstehenden Materialausnehmungen wenigstens teilweise lateral zur Oberfläche überlappen. Nach jeder Materialabtragung wird die sich jeweils geänderte Oberflächenform und/oder der sich jeweils geänderte Dehnungszustand der Oberfläche des Prüfköpers erfasst und jeweils ein Eigenspannungswert ermittelt. Auf der Grundlage der wenigstens zwei ermittelten Eigenspannungswerte werden im Weiteren die Eigenspannung und ein der Eigenspannung anhaftender Fehler bezogen auf die Materialabtragungstiefe ermittelt.
Die der Erfindung zugrunde liegende Idee sieht die Generation von statistisch auswertbaren Messwerten an einem einzigen Messbereich an der Oberfläche eines einzigen Prüfkörpers vor, indem im Wege des inkrementellen Bohrlochverfahrens in jedem einzelnen Tiefenschritt, mit dem ein gezielter Materialabtrag, vorzugsweise im Wege eines Bohr- oder Fräsvorganges mit einer vorgebbaren Bohr- oder Frästiefe vorgenommen wird, zwei oder vorzugsweise eine Vielzahl weitere, inkrementell, die initiale Materialausnehmung in lateraler Richtung zur Prüfkörperoberfläche, aufweitende Materialausnehmungen durchgeführt werden. Nach jeder schrittweise durchgeführten lateralen Materialausnehmung werden die jeweils zugehörigen Eigenspannungswerte, vorzugsweise mittels einer an der Prüfkörperoberfläche angebrachten DMS-Rosette erfasst. Hierdurch wird entsprechend der Anzahl der einzelnen pro Bohrlochtiefe, jeweils inkrementell durchgeführten Materialausnehmungsschritte mehrere Einzelspannungswerte gewonnen, die eine statistische Messwertanalyse erlauben, um auf diese Weise einen Fehlerwert für die bezogen auf die jeweilige Bohrlochtiefe ermittelten Eigenspannung angeben zu können.

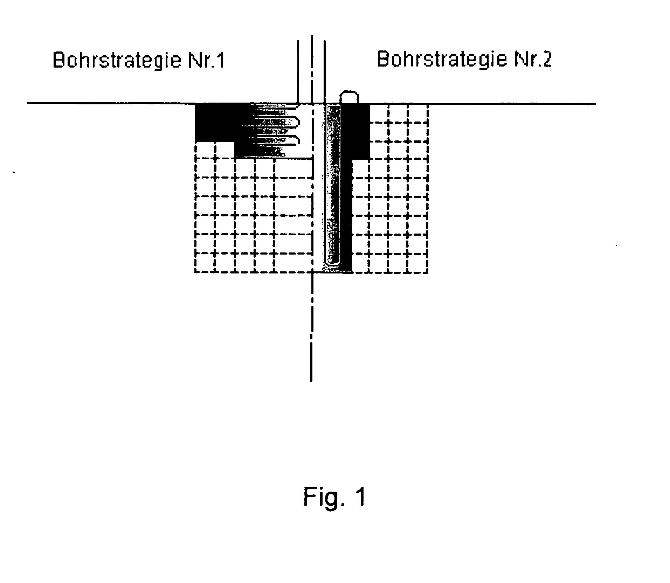

Vorzugsweise erfolgt der schrittweise Materialabtrag bei einer vorgegebenen Materialabtragungstiefe konzentrisch zu einer initialen Materialausnehmung. Werden Bohrwerkzeuge für den Materialabtrag eingesetzt, so bietet es sich an Bohrwerkzeuge mit stufenweise größer werdendem Bohrdurchmesser einzusetzen, um eine gewünschte laterale Bohrlocherweiterung bei konstanter Bohrtiefe zu erhalten. Gleichfalls ist es ebenso möglich die laterale Erweiterung des Bohrloches durch laterales Verfahren eines Bohr- oder Fräswerkzeuges herzustellen.
Neben einer streng konzentrischen, schrittweise, lateralen Erweiterung eines Bohr- oder Fräsloches sind selbstverständlich auch andere Abtragungsgeometrien um eine initiale Materialausnehmung denkbar, die sich in bevorzugte laterale Raumrichtung erstrecken können, um bspw. räumlich anisotrope Spannungszustände zu untersuchen, bspw. durch Einbringen von sich in Längsrichtung aufweitende Langlöcher oder elliptische Ausnehmungsformen.
Selbstverständlich können die Materialabtragungen auch durch andere Verfahren als die vorzugsweise genannten Bohr- oder Fräsverfahren durchgeführt werden. Ohne dabei eine Einschränkung vorzunehmen seien auch noch funkenerosive Verfahren oder Sandstrahlverfahren erwähnt.
Im Weiteren werden zwei bevorzugte Abtragsverfahren mit jeweils zwei unterschiedlichen Bohrstrategien beschrieben, mit denen das beschriebene Verfahren praktisch in diskreten Tiefen und radialen bzw. lateralen Aufweitungen umgesetzt werden kann. Innerhalb des in Anspruch 1 definierten Rahmens sind beliebige Abfolgen der einzelnen Materialabtragungen denkbar.
Bei einer ersten bevorzugten Bohrstrategie (Fig. 1, linke Seite) wird zunächst ein zylindrisches Volumenelement geringen Durchmessers mit nur einem Tiefeninkrement eliminiert bzw. abgetragen. Anschließend folgt eine inkrementelle Aufweitung in radialer Richtung unter Beibehaltung der Tiefe bis zu einem größten Radius, der bspw. durch die Dimension der an der Prüfkörperoberfläche angebrachten DMS-Rosette begrenzt ist. Nach Rückstellung auf den kleinsten Radius, d.h. der Radius des ersten entnommenen, zylindrischen Volumenelements, wird nun die nächste Tiefe angefahren und erneut inkrementell in radialer Richtung aufgeweitet. Dieser Vorgang wird wiederholt, bis die Endkontur des Bohrlochs erreicht ist. Wie bei der ersten bevorzugten Bohrstrategie werden nach jeder inkrementellen Materialabtragung die Dehnungsänderungen und/oder die Änderungen der Oberflächenform registriert.

In Anwendung der zweiten bevorzugten Bohrstrategie (Fig. 1, rechte Seite) wird eine Bohrung, vorzugsweise ein Sackloch, mit geringem Durchmesser gebohrt, wobei der Vorschub wie beim konventionellen, inkrementellen Bohrlochverfahren in diskreten Tiefenschritten erfolgt. Hierbei werden nach jedem Schritt die sich an der Prüfköperoberfläche einstellenden Dehnungsänderungen an der Oberfläche sensorisch erfasst.
Anschließend wird das Bohrwerkzeug wieder auf die Höhe der Oberfläche gebracht und der Bohrdurchmesser um ein Radialinkrement vergrößert. Erneut wird in diskreten Tiefenschritten, wie bei der ersten Bohrung, bis zum Bohrlochgrund Material abgetragen und wiederum jeweils nach jedem einzelnen Schritt die weiteren sich an der Prüfkörperoberfläche einstellenden Dehnungsänderungen sensorisch erfasst. Dieser Vorgang wird mehrmals wiederholt, so dass mit jedem größeren Radialinkrement ein zusätzlicher Hohlzylinder mit definierter Wandstärke abgetragen wird.
Das erfindungsgemäße Verfahren ist aber nicht auf diese Bohrstrategien beschränkt, vielmehr ist die Reihenfolge der einzelnen Bohrschritte und der damit verbundenen Reihenfolge, mit der die Messwerte erzeugt werden, im in Anspruch 1 definierten Rahmen beliebig. Des Weiteren sind z.B. auch eine unterschiedliche Anzahl und unterschiedliche Größen von Radialinkrementen in verschiedenen Tiefen denkbar, je nach Anforderung. Ebenfalls kann die Größe der Tiefeninkremente unterschiedlich sein.

Auch ist das lösungsgemäße Verfahren nicht auf kreisförmige Ausnehmungen beschränkt, wie sie durch einen Materialabtrag mit üblichen Bohrwerkzeugen erhalten werden, die normal zur Oberfläche des Prüfkörpers in diesen hinein getrieben werden. Gleichfalls könnten andere Bohrlochgeometrien oder auch Kombinationen aus verschiedenen Geometrien gewählt werden.

Aus jedem der für eine Materialabtragungstiefe gewonnenen Datensätze, deren Anzahl der Anzahl der Ausnehmungen / Aufweitungen entspricht, wird jeweils der Eigenspannungszustand ermittelt, der vor der ersten Materialabtragung in der entsprechenden Tiefe vorlag. Aus den hierdurch gewonnenen Werten für die Eigenspannung in dieser Tiefe kann mit Hilfe statistischer Methoden ein Fehler z.B. in Form einer Standardabweichung angegeben werden. Es muss nicht in jeder Tiefe die gleiche Anzahl von Werten ermittelt werden. Die Reihenfolge mit der die Datensätze für verschiedene Tiefen und laterale Ausdehnungen ermittelt werden ist grundsätzlich beliebig. Vorzugsweise kann die Bohrstrategie jedoch im Rahmen einer vorherigen Kalibrierung festgelegt werden, die bspw. im Wege von Vorversuchen oder mittels eines Finite-Elemente-Modells ermittelt worden ist. Hierbei wird jeder einzelnen Auswertung der entsprechende Bohrfortschritt beim Kalibrierversuch oder-modett zugeordnet, um korrekte Ergebnisse zu erzielen.

Aus den Datensätzen, die den verschiedenen Materialabtragungstiefen zugeordnet werden können, kann letztlich ein Eigenspannungstiefenverlauf ermittelt werden, bei dem die jeweiligen ermittelten Fehler für die einzelnen ermittelten Werte der Eigenspannung in der jeweiligen Tiefe angegeben werden. Je mehr Schritte für jede einzelne laterale Aufweitung vorgenommen wurden, umso größer ist die Anzahl der verfügbaren Datensätze und umso genauer kann die Messunsicherheit angegeben werden. Je mehr Schritte für das Erreichen einer Bohrlochendtiefe verwendet werden, desto genauer kann der Tiefenverlauf charakterisiert werden. Die Schrittweiten für die Materialabtragungen sind u.a. von der Auflösung der Dehnungsmessstreifen, vom ursprünglich vorliegenden Eigenspannungszustand und den elastischen Eigenschaften des Prüfkörpers abhängig. Mit dieser Methode kann die Eigenspannung in verschiedensten Materialien ermittelt werden, z.B. in Glas, Keramik, Metallen, Kunststoffen, Faserverbundstoffen, wobei bei letzteren durch die Wahl der Größe des Lochs auch ein gemittelter Wert für die Eigenspannung ermittelt werden kann.

Die der ermittelten Eigenspannung anhaftenden Fehler oder Messunsicherheiten, deren Angabe durch das lateral inkrementelle Aufweiten bei der Bohrlochmethode ermöglicht wird, spiegeln mehrere Fehlergrößen wider, die beim Bohrlochverfahren eine Rolle spielen. Darunter zählen u.a. eine bezüglich des Bohrlochzentrums oder der Bohrlochtiefe ungenau ausgeführte Bohrung, das Auftreten von plastischer Materialverformung infolge der Kerbwirkung des Bohrloches, zusätzliche, durch bspw. einen stumpfen Bohrer erzeugte Eigenspannungen. Die Größe der so ermittelten Messunsicherheiten gibt Aufschluss über die Qualität der Messung und vereinfacht die Einschätzung der Messergebnisse. Der generelle Vorteil der Erfindung besteht darin, dass unter Verwendung etablierter ökonomischer Messhilfsmittel die Angabe von Messunsicherheiten bei der Spannungsermittlung ermöglicht wird. Mit Angabe von statistisch gesicherten Messunsicherheiten wird außerdem die Möglichkeit geschaffen, das Messverfahren zu zertifizieren und die Ergebnisse solcher Messungen z.B. für Sicherheitsanalysen bzw. Lebensdauerberechnungen heranzuziehen.

Das Verfahren, mit dem zusätzliche Datensätze zur Bestimmung des Fehlers einer ermittelten Eigenspannung gewonnen werden, ist grundsätzlich nicht auf die Ermittlung von makroskopischen Eigenspannungszuständen begrenzt. Genauso können mikroskopische Eigenspannungen oder von der Kristallorientierung abhängige Eigenspannungen ermittelt werden. Dann müssen allerdings andere Verfahren zur Erzeugung der Bohrung bzw. zur Bestimmung der Änderungen des Dehnungszustandes an der Oberfläche verwendet werden, z.B. Ionenstrahlverfahren zum Bohren und Erfassung der Oberflächenform mit Rasterelektronenmikroskop.

## Patentansprüche

1. Verfahren zur Eigenspannungsermittlung eines Prüfkörpers nach einem Bohrlochverfahren, bei dem an einer Oberfläche des Prüfkörpers eine Materialabtragung zur Erzeugung einer lokal begrenzten Materialausnehmung vorgenommen wird und eine sich durch die Materialabtragung ändernde Oberflächenform und / oder ein sich durch die Materialabtragung ändernder Dehnungszustand der Oberfläche des Prüfkörpers erfasst wird, auf deren Grundlage ein Eigenspannungswert ermittelt wird, der zur Ermittlung der Eigenspannung des Prüfkörpers dient, die der Prüfkörper im Zustand vor der Materialabtragung aufwies, **gekennzeichnet dadurch,**
- **dass** mindestens zwei Materialabtragungen mit jeweils gleicher Materialabtragungstiefe durchgeführt werden,
- **dass** sich die durch mindestens zwei Materialabtragungen entstandenen Materialausnehmungen wenigstens teilweise, lateral zur Oberfläche, überlappen,
- **dass** nach jeder Materialabtragung die sich jeweils geänderte Oberflächenform und / oder der sich jeweils geänderte Dehnungszustand der Oberfläche erfasst und jeweils ein Eigenspannungswert ermittelt wird und
- **dass** auf der Grundlage der wenigstens zwei ermittelten Eigenspannungswerte die Eigenspannung und ein der Eigenspannung anhaftender Fehler bezogen auf die Materialabtragungstiefe ermittelt werden.

2. Verfahren nach Anspruch 1,
**gekennzeichnet dadurch, dass** die Eigenspannung und jeder Eigenspannungswert durch mehrere, vorzugsweise drei, Komponenten charakterisiert sind.

3. Verfahren nach Anspruch 1 oder 2,
**gekennzeichnet dadurch, dass** durch die mindestens zweite Materialabtragung eine durch die erste Materialabtragung entstandene Materialausnehmung aufgeweitet wird.

4. Verfahren nach Anspruch 3,
**gekennzeichnet dadurch, dass** die Materialausnehmung durch konzentrische Materialabtragungen aufgeweitet wird.

5. Verfahren nach Ansprüche 4,
**gekennzeichnet dadurch, dass** die Materialausnehmung eine runde, insbesondere eine kreisförmige Kontur aufweisen.

6. Verfahren nach einem der Ansprüche 1 bis 5,
**gekennzeichnet dadurch, dass** die sich ändernde Oberflächenform und / oder der sich ändernde Dehnungszustand der Oberfläche berührungslos erfasst werden.

7. Verfahren nach Anspruch 6,
**gekennzeichnet dadurch, dass** die Erfassung der sich ändernden Oberflächenform und / oder des sich ändernden Dehnungszustandes der Oberfläche mittels optischer oder elektrodynamischer, insbesondere wirbelstrommesstechnischer, Verfahren durchgeführt wird.

8. Verfahren nach einem der Ansprüche 1 bis 5,
**gekennzeichnet dadurch, dass** die sich ändernde Oberflächenform und / oder der sich ändernde Dehnungszustand der Oberfläche mit einem oder mehreren Dehnungsaufnehmern, insbesondere mit einem oder mehreren auf der Oberfläche des Prüfkörpers aufgebrachten Dehnungsmessstreifen, vorzugsweise mit einer Dehnungsmessstreifen-Rosette erfasst werden.

9. Verfahren nach einem der Ansprüche 1 bis 8,
**gekennzeichnet dadurch, dass** zur Ermittlung der Eigenspannung auf Grundlage der sich ändernden Oberflächenform und / oder des sich ändernden Dehnungszustands der Oberfläche eine Kalibrierung durchgeführt wird.

10. Verfahren nach Anspruch 9,
**gekennzeichnet dadurch, dass** die Kalibrierung durch Kalibrierversuche an Prüfkörpern mit bekanntem Eigenspannungszustand durchgeführt wird, insbesondere unter Berücksichtigung einer verwendeten Materialabtragungsstrategie.

11. Verfahren nach Anspruch 9,
**gekennzeichnet dadurch, dass** die Kalibrierung mit Hilfe Finite-Elemente-Modelle des Prüfkörpers durchgeführt wird, insbesondere unter Berücksichtigung einer verwendeten Materialabtragungsstrategie.

12. Verfahren nach einem der Ansprüche 1 bis 11,
**gekennzeichnet dadurch, dass** das Bohrlochverfahren ein inkrementelles Bohrlochverfahren ist, dass die Eigenspannung und der ihr anhaftende Fehler für mehrere Materialabtragungstiefen ermittelt wird und dass ein Tiefenverlauf für die Eigenspannung erstellt wird, bei dem den ermittelten tiefenabhängigen Eigenspannungen tiefenabhängige Fehler zugeordnet werden.

## Claims

1. A method for determining the residual stress of a test piece according to a hole drilling method in which on a surface of the test piece, a material removal for generating a locally delimited material recess is carried out and a surface form changing due to the material removal and/or a strain state of the surface of the test piece changing due to the material removal is detected, on the basis of which a residual stress value is determined which serves for determining the residual stress of the test piece which the test piece had in the state prior to the material removal, **characterized in**
- **that** at least two material removals each with the same material removal depth are carried out,
- **that** the material recesses generated by the at least two material removals overlap at least partially laterally to the surface,
- **that** after each material removal, the surface form that has changed in each case and/or the strain state of the surface that has changed in each case is detected and a residual stress value is determined in each case, and
- **that** on the basis of the at least two determined residual stress values, the residual stress and an error with which the residual stress is afflicted are determined with respect to the material removal depth.

2. The method according to claim 1,
**characterized in that** the residual stress and each residual stress value are **characterized by** a plurality of components, preferably by three components.

3. The method according to claim 1 or claim 2,
**characterized in that** by the at least second material removal, a material recess generated by the first material removal is expanded.

4. The method according to claim 3,
**characterized in that** the material recess is expanded by concentric material removals.

5. The method according to claim 4,
**characterized in that** the material recess has a round, in particular circular contour.

6. The method according to any one of the claims 1 to 5,
**characterized in that** the changing surface form and/or the changing strain state of the surface is detected in a contactless manner.

7. The method according to claim 6,
**characterized in that** the detection of the changing surface form and/or the changing strain state of the surface is carried out by means of optical or electrodynamic methods, in particular eddy current measurement methods.

8. The method according to any one of the claims 1 to 5, **characterized in that** the changing surface form and/or the changing strain state of the surface is detected with one or more strain sensors, in particular with one or more strain gages applied on the surface of the test piece, preferably with a strain gage rosette.

9. The method according to any one of the claims 1 to 8,
**characterized in that** for determining the residual stress on the basis of the changing surface form and/or the changing strain state of the surface, a calibration is carried out.

10. The method according to claim 9,
**characterized in that** the calibration is carried out by calibration trials on test pieces with known residual stress state, in particular in consideration of a used material removal strategy.

11. The method according to claim 9,
**characterized in that** the calibration is carried out by means of the finite element method, in particular in consideration of a used material removal strategy.

12. The method according to any one of the claims 1 to 11,
**characterized in that** the hole drilling method is an incremental hole drilling method, that the residual stress and the error with which the latter is afflicted are determined for a plurality of material removal depths, and that a depth profile for the residual stress is prepared in which profile to the determined depth-dependent residual stresses, depth-dependent errors are allocated.

## Revendications

1. Procédé de détermination de contrainte latente d'un corps testé selon un procédé de forage, dans lequel sur une surface du corps testé une érosion de matériau pour produire un évidement de matériau limité localement est entreprise et une forme de surface modifiant l'érosion de matériau et/ou un état de dilatation modifiant l'érosion de matériau de la surface du corps testé est enregistré, sur la base desquels une valeur de contrainte latente est déterminée, qui sert à déterminer la contrainte latente du corps testé, que présente le corps testé en l'état précédant l'érosion de matériau, **caractérisé en ce que**
- au moins deux érosions de matériau sont effectuées avec respectivement des profondeurs d'érosion de matériau identiques,
- les évidements de matériau produits par au moins deux érosions de matériau se superposent au moins partiellement, latéralement à la surface,
- après chaque érosion de matériau la forme de surface respectivement modifiée et/ou l'état de dilatation respectivement modifié de la surface est déterminé et une valeur de contrainte latente est respectivement déterminée et
- sur la base d'au moins deux valeurs de contrainte latente déterminées, la contrainte latente et les défauts inhérents à la contrainte latente sur la profondeur d'érosion de matériau sont déterminés.

2. Procédé selon la revendication 1,
**caractérisé en ce que** la contrainte latente et chaque valeur de contrainte latente sont **caractérisées par** plusieurs, de préférence trois composants.

3. Procédé selon la revendication 1 ou 2,
**caractérisé en ce que** un évidement de matériau produit par la première érosion de matériau est élargie par au moins une deuxième érosion de matériau.

4. Procédé selon la revendication 3,
**caractérisé en ce que** l'érosion de matériau est élargie par des érosions de matériau concentriques.

5. Procédé selon la revendication 4,
**caractérisé en ce que** l'évidement de matériau présente un contour rond, notamment circulaire.

6. Procédé selon une des revendications 1 à 5,
**caractérisé en ce que** la forme de surface se modifiant et/ou l'état de dilatation se modifiant de la surface sont enregistrés sans contact.

7. Procédé selon la revendication 6,
**caractérisé en ce que** l'enregistrement de la forme de surface se modifiant et/ou de l'état de dilatation se modifiant de la surface est effectué au moyen d'un procédé optique ou électrodynamique, notamment par courant de Foucault.

8. Procédé selon une des revendications 1 à 5,
**caractérisé en ce que** la forme de surface se modifiant et/ou l'état de dilatation se modifiant de la surface sont enregistrés avec un ou plusieurs capteurs de dilatation, notamment avec une ou plusieurs jauges d'extensiométrie appliquées sur la surface du corps testé, de préférence avec une rosace de jauge d'extensiométrie.

9. Procédé selon une des revendications 1 à 8,
**caractérisé en ce que** pour déterminer la contrainte latente sur la base de la forme de surface se modifiant et/ou de l'état de dilation se modifiant de la surface un calibrage est effectué.

10. Procédé selon la revendication 9,
**caractérisé en ce que** le calibrage est effectué par des essais de calibrage sur des corps testés avec un état de contrainte latente connu, notamment en tenant compte d'une stratégie d'érosion de matériau employée.

11. Procédé selon la revendication 9,
**caractérisé en ce que** le calibrage est effectué à l'aide d'un modèle à éléments finis du corps testé, notamment en tenant compte de la stratégie d'érosion de matériau employée.

12. Procédé selon une des revendications 1 à 11,
**caractérisé en ce que** le procédé de forage est un procédé de forage incrémentiel, **en ce que** la contrainte latente et le défaut qui lui est inhérent est déterminé pour plusieurs profondeurs d'érosion de matériau et **en ce que** un tracé de profondeur pour la contrainte latente est établi, dans lequel les défauts fonction de la profondeur sont coordonnés aux contraintes latentes fonction de la profondeur déterminées.
